Europäisches Patentamt

European Patent Office

Office européen des brevets

(11) Veröffentlichungsnummer: **0 525 390 A1**

# EUROPÄISCHE PATENTANMELDUNG

(21) Anmeldenummer: **92110714.0**

(22) Anmeldetag: **25.06.92**

(51) Int. Cl.5: **B27K 3/32**

(30) Priorität: **18.07.91 DE 4123867**

(43) Veröffentlichungstag der Anmeldung:
**03.02.93 Patentblatt 93/05**

(84) Benannte Vertragsstaaten:
**AT BE CH DE DK ES FR GB GR IT LI LU MC NL PT SE**

(71) Anmelder: **DESOWAG Materialschutz GmbH Rossstrasse 76 Postfach 32 02 20 W-4000 Düsseldorf 30(DE)**

(72) Erfinder: **Metzner, Wolfgang, Dr. Windmühlenstrasse 53 W-4150 Krefeld 1(DE)**
Erfinder: **Seepe, Detlef, Dr. Schönwasserstrasse 211 W-4150 Krefeld 1(DE)**

(74) Vertreter: **Seiler, Siegfried c/o DEUTSCHE SOLVAY-WERKE GmbH Langhansstrasse 6 Postfach 11 02 70 W-5650 Solingen 11(DE)**

(54) **Wasserlösliches Holzschutzmittel.**

(57) Die vorliegende Erfindung betrifft ein wasserlösliches Holzschutzmittel enthaltend oder bestehend aus bestimmten Gewichtsmengen Ammoniumchromat und/oder Ammoniumdichromat und/oder Chromsäure und/oder Chromsäureanhydrid und komplexen Fluoriden und/oder Hexafluorkieselsäure und/oder Ammoniumsilikofluorid, bestimmten Gewichtsmengen Kupfercarbonat, basischem oder mindestens eine Hydroxygruppe enthaltendem Kupfercarbonat und/oder Kupferoxid und/oder Zinkcarbonat, basischem oder mindestens eine Hydroxygruppe enthaltendem Zinkcarbonat und/oder Zinkoxid sowie gegebenenfalls Zusatz- und/oder Verarbeitungshilfsmitteln und Wasser.

EP 0 525 390 A1

EP 0 525 390 A1

Die vorliegende Erfindung betrifft ein wasserlösliches Holzschutzmittel enthaltend oder bestehend aus bestimmten Gewichtsmengen Ammoniumchromat und/oder Ammoniumdichromat und/oder Chromsäure und komplexen Fluoriden und/oder Hexafluorkieselsäure, bestimmten Gewichtsmengen Kupfercarbonat, basischem oder mindestens eine Hydroxygruppe enthaltendem Kupfercarbonat und/oder Kupferoxid und/oder Zinkcarbonat, basischem oder mindestens eine Hydroxygruppe enthaltendem Zinkcarbonat und/oder Zinkoxid sowie gegebenenfalls Zusatz- und/oder Verarbeitungshilfsmitteln und Wasser.

Holzschutzmittel mit einem Gehalt an Alkalidichromat und/oder -chromaten und/oder Chromsäure in Mengen, die 10 bis 40 Gew.-% Chrom entsprechen, wasserlöslichen Kupfer- und/oder Zinksalzen in Mengen, die 5 bis 30 Gew.-% der genannten Metalle entsprechen, komplexen Fluorverbindungen in Mengen, die 5 bis 30 Gew.-% Fluor entsprechen, mit einem Verhältnis von Chrom zu Fluor von etwa 3 : 6 sind bereits aus der DE-OS 1 492 509 bekannt.

Durch die Einhaltung eines ganz bestimmten Gewichtsverhältnisses Chrom zu Fluor gelingt es, die Korrosionsschutzeigenschaften dieses Holzschutzmittels zu verbessern, so daß es den Bedingungen gemäß DIN 52 168 hinsichtlich Korrosionswirkung auf Stahl genügt. Eine Optimierung der Wirksamkeit dieses Mittels gegenüber Moderfäule im Vergleich mit bekannten Mitteln ist jedoch nicht gegeben. Da sich die Wirkung von Zinkhexafluorsilikat als komplexes Fluorid des Zinks in chromhaltigen Holzschutzmitteln nicht als ausreichend erwiesen hat, wurden daher in chromathaltigen Holzschutzmitteln komplexe Fluoride des Kupfers wie Kupferhexafluorsilikat oder Kupferfluorborat eingesetzt.

Bei dem Einsatz von Zinkhexafluorsilikat und/oder Kupferhexafluorsilikat treten zusätzlich die Nachteile auf, daß diese Verbindungen stärker zur Klumpenbildung oder zum Zusammenbacken neigen als Ammoniumhexafluorsilikat, daß die Korrosionswirkung dieser Verbindungen stärker ist als die vom Ammoniumhexafluorsilikat und diese Verbindungen beim Verstäuben und dergleichen gesundheitlich schädlicher sind.

In neuer Zeit besteht das Bestreben, bei dem Einsatz schwermetallhaltiger Holzschutzmittel aus Gründen des Umweltschutzes zumindest den Schwermetallgehalt der Holzschutzmittel zu verringern.

Um den Schwermetallgehalt und insbesondere die toxischen Eigenschaften des sechswertigen Chroms zu verringern, wurde daher bereits in der DE-OS 33 39 908 ein wasserlösliches fixierendes Holzschutzmittel vorgeschlagen, das 55 bis 85 Gew.-% Hexafluorsilikat, 5 bis 7 Gew.-% Chromtrioxid (berechnet als Chrom), 5 bis 40 Gew.-% Ammoniumsalz der Phosphorsäure und 0,2 bis 3 Gew.-% Netzmittel und Korrosionsinhibitoren enthält.

Diese Holzschutzmittel haben jedoch den Nachteil, daß sie entweder in größeren Konzentrationen eingesetzt werden müssen, um bei Bewitterung im Freien noch einen ausreichenden Gehalt an fixierenden Holzschutzmitteln nach der Bewitterung zu enthalten oder daß sie nach der Bewitterung im Freien nicht mehr die erforderliche Menge an Schutzsalzen enthalten.

Um die Wirksamkeit dieser Holzschutzmittel zu verbessern, insbesondere eine verbesserte Wirkung gegen Moderfäuleerreger zu erreichen und gleichzeitig die erforderliche Aufwandmenge herabzusetzen, wurde bereits in der DE-OS 39 12 633 ein wasserlösliches Holzschutzmittel vorgeschlagen, das Ammoniumchromat und/oder Ammoniumdichromat und/oder Chromsäure und komplexe Fluoride von Kupfer und/oder Zink enthält, wobei das Atomverhältnis von Kupfer zu Zink in dem als komplexe Fluoride eingesetzten Gemisch aus Kupferhexfluorsilikat und Zinkhexafluorsilikat 1 : 0,59 bis 1 : 1,76 beträgt.

Dieses Holzschutzmittel weist die Vorteile auf, daß es eine gute Wirksamkeit gegenüber Moderfäuleerregern besitzt und die erforderliche Aufwandmenge gegenüber den bekannten Holzschutzmitteln herabsetzbar ist.

Innerhalb des Holzschutzmittels müssen Kupferhexafluorsilikate und Zinkhexafluorsilikate verwendet werden. Diese müssen sehr kostenaufwendig hergestellt werden.

Ziel und Aufgabe der vorliegenden Erfindung war es, ein fixierendes Holzkonservierungsmittel mit verbesserten Eigenschaften zu finden. Insbesondere sollte das Holzkonservierungsmittel besser handhabbar sein. Es sollte vermieden werden, daß Chromate oder Dichromate in der Herstellung des Holzschutzmittels zugemischt werden müssen, die z.B. bei dem Auftreten dichromathaltiger Stäube karzinogen sein sollen. Das Holzkonservierungsmittel sollte gegenüber den bekannten chromat- oder dichromathaltigen Holzkonservierungsmitteln eine geringere Korrosionsgefahr und trotzdem eine gute Fixierung im Holz aufweisen.

Erfindungsgemäß wurde festgestellt, daß diesen Zielen und Aufgaben ein wasserlösliches Holzschutzmittel enthaltend oder bestehend aus Ammoniumchromat und/oder Ammoniumdichromat und/oder Chromsäure und komplexen Fluoriden und/oder Hexafluorkieselsäure und mindestens einer Kupfer- und/oder Zinkverbindung, gerecht wird. Gemäß der Erfindung enthält das flüssige Holzkonservierungsmittel (Konzentrat) ein Gemisch von

a) Ammoniumdichromat ($(NH_4)_2Cr_2O_7$) in Gewichtsmengen von 0 bis 12 Gew.-%, und

b) Chromsäureanhydrid ($CrO_3$) und/oder Chromsäure (berechnet als $CrO_3$) in Gewichtsmengen von 10 bis 25 Gew.-%, und

c) Kupfercarbonat, basischem oder mindestens eine Hydroxygruppe enthaltendem Kupfercarbonat und/oder Kupferoxid in Gewichtsmengen von 4 bis 1 Gew.-%, (berechnet als CuO) und/oder

d) Zinkcarbonat, basischem oder mindestens eine Hydroxygruppe enthaltendem Zinkcarbonat und/oder Zinkoxid in Gewichtsmengen von 4 bis 1 Gew.-%, (berechnet als ZnO) und

e) Ammoniumsilikofluorid $((NH_4)_2SiF_6)$ oder äquivalenten Gewichtsmengen von Hexafluorkieselsäure $H_2SiF_6$ und einer Ammoniumverbindung, vorzugs-weise Ammoniak oder Ammoniumhydroxid, in Gewichtsmengen von 11,5 bis 7 Gew.-%, (berechnet als Ammoniumhexafluorsilikat) $((NH_4)_2SiF_6)$ und

f) Zusatz- und/oder Verarbeitungshilfsmitteln, vorzugsweise Korrosionsschutzmitteln oder Inhibitoren, in Gewichtsmengen von 0 bis 2 Gew.-%, sowie

g) Wasser als Restbestandteil

und/oder Umsetzungsproduktgemische dieser Bestandteile oder es besteht daraus.

Nach einer bevorzugten Ausführungsform enthält das flüssige Holzkonservierungsmittel ein Gemisch von

a) Ammoniumdichromat $((NH_4)_2Cr_2O_7)$ in Gewichtsmengen von weniger als 9 Gew.-%, vorzugsweise weniger als 6,5 Gew.-%, und

b) Chromsäureanhydrid $(CrO_3)$ und/oder Chromsäure (berechnet als $CrO_3$) in Gewichtsmengen von 14 bis 24 Gew.-% und

c) Kupfercarbonat, basischem oder mindestens eine Hydroxygruppe enthaltendem Kupfercarbonat und/oder Kupferoxid in Gewichtsmengen von 3 bis 1,5 Gew.-% (berechnet als CuO) und/oder

d) Zinkcarbonat, basischem oder mindestens eine Hydroxygruppe enthaltendem Zinkcarbonat und/oder Zinkoxid in Gewichtsmengen von 3 bis 1,5 Gew.-% (berechnet als ZnO) und

e) Ammoniumsilikofluorid $((NH_4)_2SiF_6)$ oder äquivalente Gewichtsmengen von Hexafluorkieselsäure $H_2SiF_6$ und einer Ammoniumverbindung, vorzugsweise Ammoniak oder Ammoniumhydroxid, in Gewichtsmengen von 10,5 bis 8 Gew.-%, (berechnet als Ammoniumhexafluorsilikat) $((NH_4)_2SiF_6)$ und

f) Zusatz- und/oder Verarbeitungshilfsmitteln, vorzugsweise Korrosionsschutzmitteln oder Inhibitoren, in Gewichtsmengen von 0 bis 1,5 Gew.-%, sowie

g) Wasser als Restbestandteil

in Form partieller oder vollständiger Umsetzungsprodukte und/oder Umsetzungsproduktgemische dieser Bestandteile oder es besteht daraus.

Bevorzugt ist dabei nach einer Ausführungsform die Gesamtgewichtsmenge von c) und d) (berechnet als CuO und ZnO) kleiner als 6 Gew.-%, vorzugsweise kleiner als 5,5 Gew.-%.

Das Atomverhältnis von Cu zu Zn beträgt nach einer weiteren bevorzugten Ausführungsform in dem Umsetzungsgemisch

1 : 0,55 bis 1 : 1,8, vorzugsweise

1 : 0,9 bis 1 : 1,35.

Nach einer weiteren bevorzugten Ausführungsform ist die Gesamtgewichtsmenge von a) und b) (berechnet vor der Reaktion der Bestandteile und als Konzentrat) größer als 19 Gew.-%, vorzugsweise größer als 20 Gew.-%.

Nach einer anderen bevorzugten Ausführungsform ist das Ammoniumdichromat ganz oder teilweise durch mindestens eine Arsenverbindung, vorzugsweise eine in Wasser, Chromsäure und/oder Hexafluorkieselsäure lösliche Arsenverbindung, ersetzt.

Die Gesamtgewichtsmenge von eingesetzten Ammoniumverbindungen, vorzugsweise von Ammoniumsilikofluorid und/oder Ammoniumdichromat und gegebenenfalls diese ganz oder teilweise ersetzenden Arsenverbindungen, ist größer als 9,5 Gew.-%, vorzugsweise größer als 10 Gew.-%, und/oder das Ammoniumdichromat ist in Gewichtsmengen von 0,1 bis 6,5 Gew.-%, vorzugsweise 2 bis 6,2 Gew.-%, im Holzschutzmittel (Konzentrat) enthalten.

Als Arsenverbindungen werden bevorzugt Arsen-(V)-Verbindung, vorzugsweise Arsenpentoxid, im Holzschutzmittel eingesetzt bzw. verwendet.

Nach einer vorzugsweisen Ausführungsform enthält das anwendungsfertige Holzschutzmittel

| | |
|---|---|
| 3 bis 30 Gew.-%, | vorzugsweise |
| 5 bis 10 Gew.-%, | des Holzschutzmittelkonzentrates (vorzugsweise nach einem oder mehreren der Ansprüche 1 bis 8) und |
| 97 bis 70 Gew.-%, | vorzugsweise |
| 95 bis 90 Gew.-%, | Wasser |

oder es besteht daraus.

Die Erfindung betrifft weiterhin die Verwendung des erfindungsgemäßen Holzschutzmittels oder -konzentrates zur Imprägnierung von Holz und Holzwerkstoffen im Tränk-, Tauch-, Druck- und/oder Vakuum-Verfahren.

Die Erfindung betrifft weiterhin ein Verfahren zur Herstellung eines wasserlöslichen Holzschutzmittels aus Ammoniumchromat und/oder Ammoniumdichromat und/oder Chromsäure und komplexen Fluoriden und/oder Hexafluorkieselsäure und mindestens einer Kupfer- und/oder Zinkverbindung, wobei zur Herstellung des Konzentrates

a) Ammoniumdichromat ($(NH_4)_2Cr_2O_7$) in Gewichtsmengen von 0 bis 12 Gew.-%, und

b) Chromsäureanhydrid ($CrO_3$) und/oder Chromsäure (berechnet als $CrO_3$) in Gewichtsmengen von 10 bis 25 Gew.-%, und

c) Kupfercarbonat, basisches oder mindestens eine Hydroxygruppe enthaltendes Kupfercarbonat und/oder Kupferoxid in Gewichtsmengen von 4 bis 1 Gew.-%, (berechnet als $CuO$) und/oder

d) Zinkcarbonat, basisches oder mindestens eine Hydroxygruppe enthaltendes Zinkcarbonat und/oder Zinkoxid in Gewichtsmengen von 4 bis 1 Gew.-%, (berechnet als $ZnO$) und

e) Ammoniumsilikofluorid ($(NH_4)_2SiF_6$) oder äquivalente Gewichtsmengen von Hexafluorkieselsäure $H_2SiF_6$ und einer Ammoniumverbindung, vorzugsweise Ammoniak oder Ammoniumhydroxid, in Gewichtsmengen von 11,5 bis 7 Gew.-%, (berechnet als Ammoniumhexafluorsilikat) ($(NH_4)_2SiF_6$) und

f) Zusatz- und/oder Verarbeitungshilfsmittel, vorzugsweise Korrosionsschutzmittel oder Inhibitoren, in Gewichtsmengen von 0 bis 2 Gew.-%, sowie

g) Wasser als Restbestandteil

bei Temperaturen von 0 bis 95 °C miteinander vermischt werden.

Bevorzugt werden

a) Ammoniumdichromat ($(NH_4)_2Cr_2O_7$) in Gewichtsmengen von weniger als 9 Gew.-%, vorzugsweise weniger als 6,5 Gew.-%, und

b) Chromsäureanhydrid ($CrO_3$) und/oder Chromsäure (berechnet als $CrO_3$) in Gewichtsmengen von 14 bis 24 Gew.-% und

c) Kupfercarbonat, basisches oder mindestens eine Hydroxygruppe enthaltendes Kupfercarbonat und/oder Kupferoxid in Gewichtsmengen von 3 bis 1,5 Gew.-% (berechnet als $CuO$) und/oder

d) Zinkcarbonat, basisches oder mindestens eine Hydroxygruppe enthaltendes Zinkcarbonat und/oder Zinkoxid in Gewichtsmengen von 3 bis 1,5 Gew.-% (berechnet als $ZnO$) und

e) Ammoniumsilikofluorid ($(NH_4)_2SiF_6$) oder äquivalente Gewichtsmengen von Hexafluorkieselsäure $H_2SiF_6$ und einer Ammoniumverbindung, vorzugsweise Ammoniak oder Ammoniumhydroxid, in Gewichtsmengen von 10,5 bis 8 Gew.-%, (berechnet als Ammoniumhexafluorsilikat) ($(NH_4)_2SiF_6$) und

f) Zusatz- und/oder Verarbeitungshilfsmittel, vorzugsweise Korrosionsschutzmittel oder Inhibitoren, in Gewichtsmengen von 0 bis 1,5 Gew.-%, sowie

g) Wasser als Restbestandteil

bei Temperaturen von 15 bis 60 °C zur Herstellung des Konzentrates miteinander vermischt.

Bevorzugt wird eine Gesamtgewichtsmenge von c) und d) (berechnet als $CuO$ und $ZnO$) verwendet bzw. zur Umsetzung eingesetzt, die kleiner als 6 Gew.-%, vorzugsweise kleiner als 5,5 Gew.-%, ist und/oder es wird ein Atomverhältnis von Cu zu Zn in dem Umsetzungsgemisch eingestellt, das

1 : 0,55 bis 1 : 1,8, vorzugsweise

1 : 0,9 bis 1 : 1,35,

beträgt.

Nach einer Ausführungsform wird eine Gesamtgewichtsmenge von a) und b) (berechnet vor der Reaktion der Bestandteile und als Konzentrat) eingestellt, die größer als 19 Gew.-%, vorzugsweise größer als 20 Gew.-%, ist.

Nach einer anderen Ausführungsform wird das Ammoniumdichromat ganz oder teilweise durch mindestens eine Arsenverbindung, vorzugsweise eine in Wasser, Chromsäure und/oder Hexafluorkieselsäure lösliche Arsenverbindung, ersetzt.

Nach einer bevorzugten Ausführungsform des erfindungsgemäßen Verfahrens werden das Wasser oder mehr als 50 Gew.-% des einzusetzenden Wassers und Chromsäureanhydrid in Gewichtsmengen von 10 bis 25 Gew.-%, vorzugsweise 14 bis 24 Gew.-%, $CrO_3$ sowie (falls zum Einsatz vorgesehen) freie Fluorkieselsäure $H_2SiF_6$ vorgelegt und nach Auflösung unter Umrühren Kupfercarbonat, basisches oder mindestens eine Hydroxygruppe enthaltendes Kupfercarbonat und/oder Kupferoxid in Gewichtsmengen von 4 bis 1 Gew.-% (berechnet als $CuO$), vorzugsweise 3 bis 1,5 Gew.-%, und/oder Zinkcarbonat, basisches oder mindestens eine Hydroxygruppe enthaltendes Zinkcarbonat und/oder Zinkoxid in Gewichtsmengen von 4 bis 1 Gew.-% (berechnet als $ZnO$), vorzugsweise 3 bis 1,5 Gew.-%, gelöst und nachfolgend Ammoniumsilikofluorid sowie gegebenenfalls Ammoniumdichromat und/oder mindestens eine Arsenverbindung und gege-

4

benenfalls Zusatz-und/oder Verarbeitungshilfsmittel zugefügt.

Vorzugsweise wird die Gesamtgewichtsmenge von einzusetzenden Ammoniumverbindungen, vorzugsweise von Ammoniumsilikofluorid und/oder Ammoniumdichromat und gegebenenfalls diese ganz oder teilweise ersetzenden Arsenverbindungen, größer als 9,5 Gew.-%, vorzugsweise größer als 10 Gew.-%, eingestellt und/oder das Ammoniumdichromat wird in Gewichtsmengen von 0,1 bis 6,5 Gew.-%, vorzugsweise 2 bis 6,2 Gew.-%, verwendet bzw. zugefügt.

Als Arsenverbindungen werden bevorzugt eine Arsen-(V)-Verbindung, vorzugsweise Arsenpentoxid, verwendet.

Das anwendungsfertige Holzschutzmittel wird durch Vermischen von

| 3 bis 30 Gew.-%, | vorzugsweise |
| 5 bis 10 Gew.-%, | des Holzschutzmittelkonzentrates und |
| 97 bis 70 Gew.-%, | vorzugsweise |
| 95 bis 90 Gew.-%, | Wasser |

hergestellt.

Der Wassergehalt des Konzentrates liegt nach einer Ausführungsform unter 73 Gew.-%, vorzugsweise zwischen 70 und 50 Gew.-%.

Nach einer weiteren bevorzugten Ausführungsform liegt der Wassergehalt des Konzentrates zwischen 60 und 69 Gew.-%.

Das erfindungsgemäße Holzkonservierungsmittel stellt bereits als Konzentrat oder in konzentrierter Form eine Flüssigkeit dar. Dadurch werden chromat- oder dichromathaltige Stäube, die karzinogen sind, bei der Anwendung vermieden.

Auch die Verpackungsprobleme werden unter Verwendung der Flüssigformulierung verringert, so daß z.B. kleinere Leergebinde nicht erforderlich sind. Das Holzkonservierungsmittel wird überwiegend im Mehrwegcontainer transportiert.

Bei dem erfindungsgemäßen Holzkonservierungsmittel ist das Korrosions- und Fixierungsverhalten des Holzkonservierungsmittels verbessert und es wird eine geringere Auswaschung des in das Holz eingebrachten erfindungsgemäßen Holzschutzmittels bei Bewitterung erzielt. Die Fixierung wird bei dem erfindungsgemäßen Holzschutzmittel in einem gewissen Bereich mit steigendem Ammoniumanteil verbessert.

Das Holzschutzmittel ist besser handhabbar. Klumpenbildungen bei der Lagerung treten nicht ein.

Das Holzkonservierungsmittel kann unter Verwendung von Dosiervorrichtungen leichter eingegeben werden.

## Beispiele

Beispiel 1

| Chromsäureanhydrid ($CrO_3$) und/oder Chromsäure (berechnet als $CrO_3$) | 23,1 Gew.-% |
| Kupferoxid (CuO) | 2,3 Gew.-% |
| Zinkoxid (ZnO) | 2,4 Gew.-% |
| Ammoniumsilikofluorid (($NH_4$)$_2$$SiF_6$) | 10,3 Gew.-% |
| Wasser als Restbestandteil ($H_2O$) | 61,9 Gew.-% |

Beispiel 2

| Ammoniumdichromat ($(NH_4)_2Cr_2O_7$) | 3,3 Gew.-% |
|---|---|
| Chromsäureanhydrid ($CrO_3$) | 18,6 Gew.-% |
| Kupferoxid ($CuO$) | 2,1 Gew.-% |
| Zinkoxid ($ZnO$) | 2,2 Gew.-% |
| Ammoniumsilikofluorid ($(NH_4)_2SiF_6$) | 9,4 Gew.-% |
| Wasser als Restbestandteil ($H_2O$) | 64,4 Gew.-% |

Beispiel 3

| Ammoniumdichromat ($(NH_4)_2Cr_2O_7$) | 6,2 Gew.-% |
|---|---|
| Chromsäureanhydrid ($CrO_3$) | 14,8 Gew.-% |
| Kupferoxid ($CuO$) | 2,0 Gew.-% |
| Zinkoxid ($ZnO$) | 2,0 Gew.-% |
| Ammoniumsilikofluorid ($(NH_4)_2SiF_6$) | 8,8 Gew.-% |
| Wasser als Restbestandteil ($H_2O$) | 66,2 Gew.-% |

Beispiel 4

| Arsenpentoxid ($As_2O_5$) | 3,3 Gew.-% |
|---|---|
| Chromsäureanhydrid ($CrO_3$) | 18,6 Gew.-% |
| Kupferoxid ($CuO$) | 2,1 Gew.-% |
| Zinkoxid ($ZnO$) | 2,2 Gew.-% |
| Ammoniumsilikofluorid ($(NH_4)_2SiF_6$) | 9,4 Gew.-% |
| Wasser als Restbestandteil ($H_2O$) | 64,4 Gew.-% |

**Patentansprüche**

1. Wasserlösliches Holzschutzmittel enthaltend oder bestehend aus Ammoniumchromat und/oder Ammoniumdichromat und/oder Chromsäure und komplexen Fluoriden und/oder Hexafluorkieselsäure und mindestens einer Kupfer- und/oder Zinkverbindung, dadurch gekennzeichnet, daß das flüssige Holzkonservierungsmittel (Konzentrat) ein Gemisch von

   a) Ammoniumdichromat ($(NH_4)_2Cr_2O_7$) in Gewichtsmengen von 0 bis 12 Gew.-%, und

   b) Chromsäureanhydrid ($CrO_3$) und/oder Chromsäure (berechnet als $CrO_3$) in Gewichtsmengen von 10 bis 25 Gew.-%, und

   c) Kupfercarbonat, basischem oder mindestens eine Hydroxygruppe enthaltendem Kupfercarbonat und/oder Kupferoxid in Gewichtsmengen von 4 bis 1 Gew.-%, (berechnet als $CuO$) und/oder

   d) Zinkcarbonat, basischem oder mindestens eine Hydroxygruppe enthaltendem Zinkcarbonat und/oder Zinkoxid in Gewichtsmengen von 4 bis 1 Gew.-% (berechnet als $ZnO$) und

   e) Ammoniumsilikofluorid ($(NH_4)_2SiF_6$) oder äquivalenten Gewichtsmengen von Hexafluorkieselsäure $H_2SiF_6$ und einer Ammoniumverbindung, vorzugsweise Ammoniak oder Ammoniumhydroxid, in Gewichtsmengen von 11,5 bis 7 Gew.-%, (berechnet als Ammoniumhexafluorsilikat) ($(NH_4)_2SiF_6$) und

   f) Zusatz- und/oder Verarbeitungshilfsmitteln, vorzugsweise Korrosionsschutzmitteln oder Inhibitoren, in Gewichtsmengen von 0 bis 2 Gew.-%, sowie

   g) Wasser als Restbestandteil

   direkt enthält und/oder Umsetzungsproduktgemische dieser Bestandteile enthält oder daraus besteht.

2. Holzschutzmittel nach Anspruch 1, dadurch gekennzeichnet, daß das flüssige Holzkonservierungsmittel ein Gemisch von

   a) Ammoniumdichromat ($(NH_4)_2Cr_2O_7$) in Gewichtsmengen von weniger als 9 Gew.-%, vorzugsweise weniger als 6,5 Gew.-%, und

b) Chromsäureanhydrid ($CrO_3$) und/oder Chromsäure (berechnet als $CrO_3$) in Gewichtsmengen von 14 bis 24 Gew.-% und

c) Kupfercarbonat, basischem oder mindestens eine Hydroxygruppe enthaltendem Kupfercarbonat und/oder Kupferoxid in Gewichtsmengen von 3 bis 1,5 Gew.-% (berechnet als CuO) und/oder

d) Zinkcarbonat, basischem oder mindestens eine Hydroxygruppe enthaltendem Zinkcarbonat und/oder Zinkoxid in Gewichtsmengen von 3 bis 1,5 Gew.-% (berechnet als ZnO) und

e) Ammoniumsilikofluorid (($NH_4$)$_2$$SiF_6$) oder äquivalente Gewichtsmengen von Hexafluorkieselsäure $H_2SiF_6$ und einer Ammoniumverbindung, vorzugsweise Ammoniak oder Ammoniumhydroxid, in Gewichtsmengen von 10,5 bis 8 Gew.-%, (berechnet als Ammoniumhexafluorsilikat) (($NH_4$)$_2$$SiF_6$) und

f) Zusatz- und/oder Verarbeitungshilfsmitteln, vorzugsweise Korrosionsschutzmitteln oder Inhibitoren, in Gewichtsmengen von 0 bis 1,5 Gew.-%, sowie

g) Wasser als Restbestandteil

in Form partieller oder vollständiger Umsetzungsprodukte und/oder Umsetzungsproduktgemische dieser Bestandteile enthält oder daraus besteht.

3. Holzschutzmittel nach Ansprüchen 1 und 2, dadurch gekennzeichnet, daß die Gesamtgewichtsmenge von c) und d) (berechnet als CuO und ZnO) kleiner als 6 Gew.-%, vorzugsweise kleiner als 5,5 Gew.-%, ist.

4. Holzschutzmittel nach einem oder mehreren der Ansprüche 1 und 3, dadurch gekennzeichnet, daß das Atomverhältnis von Cu zu Zn in dem Umsetzungsgemisch

1 : 0,55 bis 1 : 1,8, vorzugsweise
1 : 0,9 bis 1 : 1,35,

beträgt.

5. Holzschutzmittel nach einem oder mehreren der Ansprüche 1 bis 4, dadurch gekennzeichnet, daß die Gesamtgewichtsmenge von a) und b) (berechnet vor der Reaktion der Bestandteile und als Konzentrat) größer als 19 Gew.-%, vorzugsweise größer als 20 Gew.-%, ist.

6. Holzschutzmittel nach einem oder mehreren der Ansprüche 1 bis 5, dadurch gekennzeichnet, daß das Ammoniumdichromat ganz oder teilweise durch mindestens eine Arsenverbindung, vorzugsweise eine in Wasser, Chromsaure und/oder Hexafluorkieselsäure lösliche Arsenverbindung, ersetzt ist.

7. Holzschutzmittel nach einem oder mehreren der Ansprüche 1 bis 6, dadurch gekennzeichnet, daß die Gesamtgewichtsmenge von eingesetzten Ammoniumverbindungen, vorzugsweise von Ammoniumsilikofluorid und/oder Ammoniumdichromat und gegebenenfalls diese ganz oder teilweise ersetzenden Arsenverbindungen, größer als 9,5 Gew.-%, vorzugsweise größer als 10 Gew.-%, ist und/oder das Ammoniumdichromat in Gewichtsmengen von 0,1 bis 6,5 Gew.-%, vorzugsweise 2 bis 6,2 Gew.-%, eingesetzt ist.

8. Holzschutzmittel nach einem oder mehreren der Ansprüche 1 bis 7, dadurch gekennzeichnet, daß als Arsenverbindung eine Arsen-(V)-Verbindung, vorzugsweise Arsenpentoxid, im Holzschutzmittel enthalten sind.

9. Holzschutzmittel nach einem oder mehreren der Ansprüche 1 bis 8, dadurch gekennzeichnet, daß das anwendungsfertige Holzschutzmittel

| 3 bis 30 Gew.-%, | vorzugsweise |
| 5 bis 10 Gew.-%, | des Holzschutzmittelkonzentrates und |
| 97 bis 70 Gew.-%, | vorzugsweise |
| 95 bis 90 Gew.-%, | Wasser enthält. |

**10.** Verwendung des Holzschutzmittels nach einem oder mehreren der Ansprüche 1 bis 9 zur Imprägnierung von Holz und Holzwerkstoffen im Tränk-, Tauch-, Druck- und/oder Vakuum-Verfahren.

**11.** Verfahren zur Herstellung eines wasserlöslichen Holzschutzmittels aus Ammoniumchromat und/oder Ammoniumdichromat und/oder Chromsäure und komplexen Fluoriden und/oder Hexafluorkieselsäure und mindestens einer Kupfer- und/oder Zinkverbindung, dadurch gekennzeichnet, daß zur Herstellung des Konzentrates

a) Ammoniumdichromat ($(NH_4)_2Cr_2O_7$) in Gewichtsmengen von 0 bis 12 Gew.-%, und

b) Chromsäureanhydrid ($CrO_3$) und/oder Chromsäure (berechnet als $CrO_3$) in Gewichtsmengen von 10 bis 25 Gew.-%, und

c) Kupfercarbonat, basisches oder mindestens eine Hydroxygruppe enthaltendes Kupfercarbonat und/oder Kupferoxid in Gewichtsmengen von 4 bis 1 Gew.-%, (berechnet als CuO) und/oder

d) Zinkcarbonat, basisches oder mindestens eine Hydroxygruppe enthaltendes Zinkcarbonat und/oder Zinkoxid in Gewichtsmengen von 4 bis 1 Gew.-%, (berechnet als ZnO) und

e) Ammoniumsilikofluorid ($(NH_4)_2SiF_6$) oder äquivalente Gewichtsmengen von Hexafluorkieselsäure $H_2SiF_6$ und einer Ammoniumverbindung, vorzugsweise Ammoniak oder Ammoniumhydroxid, in Gewichtsmengen von 11,5 bis 7 Gew.-%, (berechnet als Ammoniumhexafluorsilikat) ($(NH_4)_2SiF_6$) und

f) Zusatz- und/oder Verarbeitungshilfsmittel, vorzugsweise Korrosionsschutzmittel oder Inhibitoren, in Gewichtsmengen von 0 bis 2 Gew.-%, sowie

g) Wasser als Restbestandteil

bei Temperaturen von 0 bis 95 °C miteinander vermischt werden.

**12.** Verfahren nach Anspruch 11, dadurch gekennzeichnet, daß

a) Ammoniumdichromat ($(NH_4)_2Cr_2O_7$) in Gewichtsmengen von weniger als 9 Gew.-%, vorzugsweise weniger als 6,5 Gew.-%, und

b) Chromsäureanhydrid ($CrO_3$) und/oder Chromsäure (berechnet als $CrO_3$) in Gewichtsmengen von 14 bis 24 Gew.-% und

c) Kupfercarbonat, basisches oder mindestens eine Hydroxygruppe enthaltendes Kupfercarbonat und/oder Kupferoxid in Gewichtsmengen von 3 bis 1,5 Gew.-% (berechnet als CuO) und/oder

d) Zinkcarbonat, basisches oder mindestens eine Hydroxygruppe enthaltendes Zinkcarbonat und/oder Zinkoxid in Gewichtsmengen von 3 bis 1,5 Gew.-% (berechnet als ZnO) und

e) Ammoniumsilikofluorid ($(NH_4)_2SiF_6$) oder äquivalente Gewichtsmengen von Hexafluorkieselsäure $H_2SiF_6$ und einer Ammoniumverbindung, vorzugsweise Ammoniak oder Ammoniumhydroxid, in Gewichtsmengen von 10,5 bis 8 Gew.-%, (berechnet als Ammoniumhexafluorsilikat) ($(NH_4)_2SiF_6$) und

f) Zusatz- und/oder Verarbeitungshilfsmittel, vorzugsweise Korrosionsschutzmittel oder Inhibitoren, in Gewichtsmengen von 0 bis 1,5 Gew.-%, sowie

g) Wasser als Restbestandteil

bei Temperaturen von 15 bis 60 °C zur Herstellung des Konzentrates miteinander vermischt werden.

**13.** Verfahren nach Ansprüchen 11 und 12, dadurch gekennzeichnet, daß eine Gesamtgewichtsmenge von c) und d) (berechnet als CuO und ZnO) verwendet wird, die kleiner als 6 Gew.-%, vorzugsweise kleiner als 5,5 Gew.-%, ist und/oder daß ein Atomverhältnis von Cu zu Zn in dem Umsetzungsgemisch eingestellt wird, das

1 : 0,55 bis 1 : 1,8, vorzugsweise

1 : 0,9 bis 1 : 1,35,

beträgt.

**14.** Verfahren nach einem oder mehreren der Ansprüche 11 bis 13, dadurch gekennzeichnet, daß eine Gesamtgewichtsmenge von a) und b) (berechnet vor der Reaktion der Bestandteile und als Konzentrat) eingestellt wird, die größer als 19 Gew.-%, vorzugsweise größer als 20 Gew.-%, ist.

**15.** Verfahren nach einem oder mehreren der Ansprüche 11 bis 14, dadurch gekennzeichnet, daß das Ammoniumdichromat ganz oder teilweise durch mindestens eine Arsenverbindung, vorzugsweise eine in Wasser, Chromsäure und/oder Hexafluorkieselsäure lösliche Arsenverbindung, ersetzt wird.

8

**16.** Verfahren nach einem oder mehreren der Ansprüche 11 bis 15, dadurch gekennzeichnet, daß das Wasser oder mehr als 50 Gew.-% des einzusetzenden Wassers und Chromsäureanhydrid in Gewichtsmengen von 10 bis 25 Gew.-%, vorzugsweise 14 bis 24 Gew.-%, $CrO_3$ sowie (falls zum Einsatz vorgesehen) freie Fluorkieselsäure $H_2SiF_6$ vorgelegt und nach Auflösung unter Umrühren Kupfercarbonat, basisches oder mindestens eine Hydroxygruppe enthaltendes Kupfercarbonat und/oder Kupferoxid in Gewichtsmengen von 4 bis 1 Gew.-% (berechnet als CuO), vorzugsweise 3 bis 1,5 Gew.-%, und/oder Zinkcarbonat, basisches oder mindestens eine Hydroxygruppe enthaltendes Zinkcarbonat und/oder Zinkoxid in Gewichtsmengen von 4 bis 1 Gew.-% (berechnet als ZnO), vorzugsweise 3 bis 1,5 Gew.-%, gelöst und nachfolgend Ammoniumsilikofluorid sowie gegebenenfalls Ammoniumdichromat und/oder mindestens eine Arsenverbindung und gegebenenfalls Zusatz- und/oder Verarbeitungshilfsmittel zugefügt werden.

**17.** Verfahren nach einem oder mehreren der Ansprüche 11 bis 16, dadurch gekennzeichnet, daß die Gesamtgewichtsmenge von einzusetzenden Ammoniumverbindungen, vorzugsweise von Ammoniumsilikofluorid und/oder Ammoniumdichromat und gegebenenfalls diese ganz oder teilweise ersetzenden Arsenverbindungen, größer als 9,5 Gew.-%, vorzugsweise größer als 10 Gew.-%, eingestellt wird und/oder das Ammoniumdichromat in Gewichtsmengen von 0,1 bis 6,5 Gew.-%, vorzugsweise 2 bis 6,2 Gew.-%, verwendet wird.

**18.** Verfahren nach einem oder mehreren der Ansprüche 11 bis 17, dadurch gekennzeichnet, daß als Arsenverbindung eine Arsen-(V)-Verbindung, vorzugsweise Arsenpentoxid, verwendet wird.

**19.** Verfahren nach einem oder mehreren der Ansprüche 11 bis 18, dadurch gekennzeichnet, daß das anwendungsfertige Holzschutzmittel aus

| | |
|---|---|
| 3 bis 30 Gew.-%, | vorzugsweise |
| 5 bis 10 Gew.-%, | des Holzschutzmittelkonzentrates und |
| 97 bis 70 Gew.-%, | vorzugsweise |
| 95 bis 90 Gew.-%, | Wasser |

durch Vermischen hergestellt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | AU-A-415 133 (BAYER)<br>* Seite 5, Zeile 17 - Zeile 24 *<br>* Seite 8, Zeile 6 - Zeile 31 *<br>* Seite 12; Beispiele 8,9 *<br>* Ansprüche *<br>--- | 1-19 | B27K3/32 |
| X | FR-A-1 496 647 (BAYER)<br>* Seite 1, linke Spalte, Zeile 1 - Zeile 7 *<br>* Seite 1, rechte Spalte, Zeile 32 - Zeile 35 *<br>* Seite 2, Zeile 25 - Zeile 36 *<br>* Seite 3; Beispiele *<br>--- | 1-19 | |
| Y | DE-A-1 959 993 (VEB CHEMIEKOMBINAT)<br>* Seite 9; Beispiel 1.4 *<br>* Seite 6, Zeile 3 *<br>* Seite 7, Zeile 1 - Zeile 3 *<br>--- | 1-19 | |
| Y | EP-A-0 393 306 (DESOWAG)<br>* Spalte 2, Zeile 25 - Zeile 35 *<br>--- | 1-19 | RECHERCHIERTE SACHGEBIETE (Int. Cl.5) |
| A | US-A-2 408 978 (B.O.HÄGER ET AL.)<br>--- | | B27K |
| A | US-A-4 323 477 (R.B.HILL)<br>--- | | |
| A | BE-A-417 672 (BOLIDENS GRUVAKTIEBOLAG)<br><br>----- | | |

Der vorliegende Recherchenbericht wurde für alle Patentansprüche erstellt

| Recherchenort | Abschlußdatum der Recherche | Prüfer |
|---|---|---|
| DEN HAAG | 22 OKTOBER 1992 | DALKAFOUKI A. |